# EUROPEAN PATENT APPLICATION

(11) **EP 0 882 619 A2**
(43) Date of publication of application: **09.12.1998**
(21) Application number: 98830027.3
(22) Date of filing: 23.01.1998
(51) Int. Cl.: B60N 2/16

(54) **Cushion adjustment device for a motor-vehicle seat**

(30) Priority: 28.05.1997 IT TO970460
(71) Applicant: LEAR CORPORATION ITALIA S.p.A., 10128 Torino (IT)
(72) Inventor: Arefi, Majid, 10024 Moncalieri (Torino) (IT)
(74) Representative: Notaro, Giancarlo

(57) **Abstract**

There is described a device for adjusting the height of a cushion of a motor-vehicle seat (1), which comprises a parallelogram linkage (8) which can be actuated in order to change the height of the entire cushion. This parallelogram linkage (8) further includes an arm (19) adjustable in length which enables a change of the height of the front part of the cushion relative to the rear part to be obtained independently from the adjustment of the height of the entire seat.

## Description

The present invention relates to devices for adjusting the height of the cushion of a motor-vehicle seat, of the type comprising a base frame and a cushion frame connected to the base frame by a parallelogram linkage, and means for adjusting this parallelogram linkage.

Devices of the above indicated type are commonly used in motor-vehicle seats in order to enable to user to adapt the height of the seat to his needs. Devices are also known which are used for adjusting the cushion attitude, i.e. the height of the front portion of the cushion relative to the rear portion thereof, independently from the height adjustment of the entire seat. However, the devices known which enable the height of the entire seat to be adjusted independently from the cushion attitude are relatively complicated and expensive.

The object of the present invention is that of providing a particularly simple and efficient seat, which has the possibility of adjusting both the whole height of the entire cushion and, independently from this, the attitude of the cushion, with means of simple and inexpensive construction.

In order to achieve this object, the invention provides a device for adjusting the height of the cushion of a motor-vehicle seat, of the type indicated at the beginning of the present description, characterized in that said parallelogram linkage includes an arm which is adjustable in length.

Due to this feature, for each adjusting position of the parallelogram linkage, corresponding to a determined height of the entire cushion of the seat, it is possible to provide an adjustment of the attitude of the cushion, i.e. the height of the front part thereof relative to the rear part.

In a preferred embodiment, said arm which is adjustable in length is formed by a cylinder of adjustable length of the type comprising a cylindrical body and a stem slidably mounted within the cylindrical body and adapted to be locked at any position within this body by means of a helical spring wound around the stem and carried by the cylindrical body, the spring being normally tightened around the stem so as to lock the stem by friction, unlocking means being provided for expanding the turns of said helical spring so as to enable the stem to slide freely. Cylinders of adjustable length of the above indicate type are well khown per se. One example of these devices is disclosed in European patent EP-B-0 182 440.

However, it is clearly apparent that the invention is applicable also with the use of any other type of arm adjustable in length, in replacement of the above described adjustable cylinder.

The invention will be now described with reference to the annexed drawings, given purely by way of non limiting example, in which:
figure **1** is a perspective view from below of a motor-vehicle seat,
figures **2, 3** are diagrammatic side views of the supporting frame of the seat of figure 1 in two different operative conditions.

In the drawings, reference numeral 1 generally designates a motor-vehicle seat comprising a cushion 2 and a backrest 3 connected to cushion 2 by a device 4 for backrest adjustment. The cushion 2 comprises a frame 5 of sheet metal which in the illustrated example includes two side plates 6 connected to each other by a front cross-member 7. The cushion frame 5 is connected by a parallelogram linkage 8, which will be described in detail in the following, to a base frame formed by two longitudinal profiles 9 rigidly connected to each other by cross elements (only partially illustrated) the profiles 9 being slidably mounted, in a way conventional per se, on two cooperating longitudinal guides secured to the motor-vehicle floor panel in order to enable adjustment of the longitudinal position of the seat on the motor-vehicle.

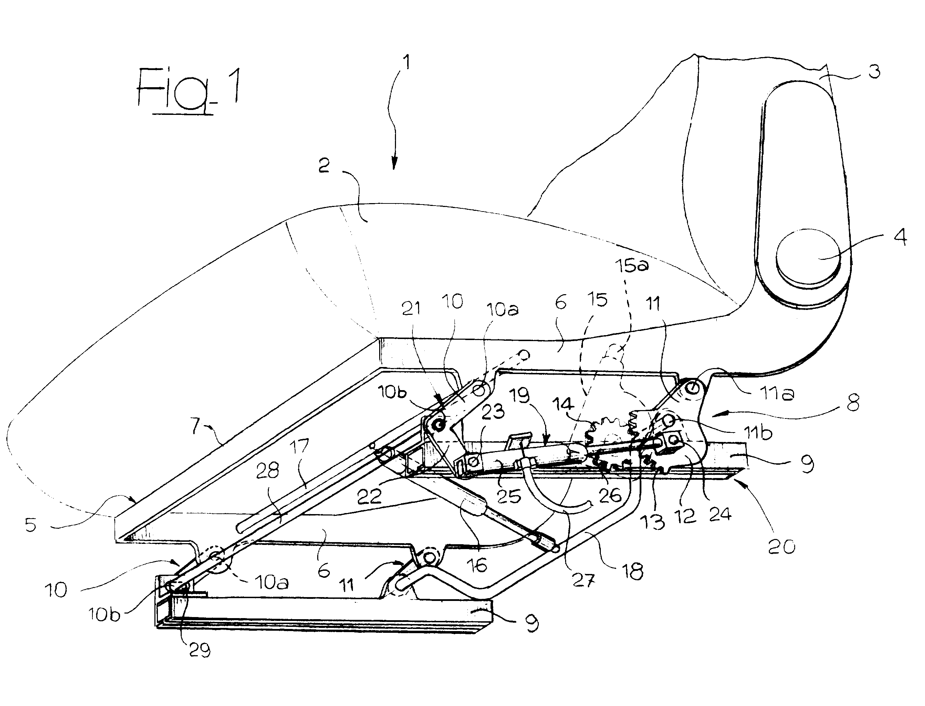

The above described general arrangement is known per se. Also known is the configuration of the parallelogram linkage 8 which includes, for each side of seat 1, a front articulated arm 10 and a rear articulated arm 11. The arm 10 is articulated around transverse axes at 10a to frame 5 of cushion 2 and at 10b to the respective profile 9 of the base frame 20. The rear arm 11 is articulated to frame 5 of the cushion at 11a and to the respective profile 9 at 11b. Due to the connection formed by the parallelogram linkage 8, when this parallelogram linkage changes its configuration, the seat 1 is moved vertically relative to the base frame 20. Yet according to a technique known per se, on one side of the seat, the articulated arm 11 forms part of a plate 12 on which a toothed sector 13 is formed engaging a toothed wheel 14 rotatably supported by the base frame 20 and connected through a driving transmission (not shown) to an actuating lever 15 provided with an extendable handgrip 15a, whose profile is shown by dotted lines in figure 1. The details of construction of the actuating lever 15 and the above mentioned driving transmission are not shown herein since they are of a known type and they do not fall, taken alone, within the scope of the invention. Furthermore, the deletion of these details from the drawings renders the latter simpler and easier to understand.

According to a technique known per se, the user may operate lever 15 in order to modify the configuration of the parallelogram linkage 8 and then the height of the whole seat 1. The seat is pushed upwardly by a gas spring 16 having one end connected to a transverse shaft 17 which rigidly connects the two sides 6 of the cushion frame 5 to each other, the other end being connected to a shaft 18 which connects the two arms 11 arranged on the two sides of the seat to each other in rotation around axis 11b. The gas spring 16 tends to extend and therefore tends to move the seat towards the position of maximum height. The actuating device 15 which drives the parallelogram linkage is of a known type which is adapted to lock the parallelogram linkage 8 at any position at which it has been left, against the action of spring 16, when device 15 is released. By actuating the device 15, the user may cause a rotation of the articulated arms and hence a change in the configuration of the whole parallelogram linkage 8 which causes a change in height of the seat. If the user wishes to raise the seat, he has only to allow the thrust of spring 16 while actuating lever 15. If instead he wishes to lower the seat, the user may exploit his weight in order to push the cushion downwardly, against the action of spring 16, while actuating lever 15.

As indicated already above, the above described structure and operation of the device for adjusting the height of the seat are of a type known per se.

The device according to the invention differs however from the prior art in that it has an additional feature. Indeed, according to the invention, the parallelogram linkage 8 includes an arm 19 of adjustable length. More precisely, on one side of the seat, the arm 10 forms part of a L-shaped element 21, having a further arm 22. The adjustable arm 19 is pivotally connected at 23 to arm 22 and at 24 to plate 12 at a position which is diagrammatically opposite to axis 11a with respect to axis 11b.

In the preferred embodiment which is shown in the drawings, the arm of adjustable length is formed by a cylinder of the type known for example from European patent EP-B-0 182 440, comprising a cylindrical body 25 within which there is slidably mounted a stem 26. According to a technique known per se, the stem 26 can be locked at any position relative to the cylindrical body 25 by means of a helical spring carried inside the cylindrical body 25. In its undeformed condition, this spring has an inner diameter which is slightly lower that the diameter of stem 26. Therefore, in the rest condition, the helical spring is tightened around stem 26 and thus locks the stem by friction. If one wishes to adjust the length of arm 19, it is sufficient to drive, by a control bowden cable 27, an actuating element carried by the cylindrical body 25 which causes the turns of the helical spring to expand. In this manner, as long as the bowden cable 27 is being pulled (by an actuating lever which can be provided at an easily reachable position, such as on one side of the seat), the cylinder 19 is free of changing its length by the sliding of the stem 26 relative to the cylindrical body 25.

Therefore, independently from the adjustment of the height of seat 1 which can be controlled by the actuating lever 15, the user may obtain a change in the attitude of the cushion by actuating the bowden cable 27 and causing a lengthening or a shortening of cylinder 19. The lengthening movement is obtained by decreasing the weight applied over the seat, so as to favour the action of spring 16 tending to raise the seat. The shortening movement is obtained in the opposite way, by increasing the downward force applied on the cushion so as to lower it against the action of spring 16.

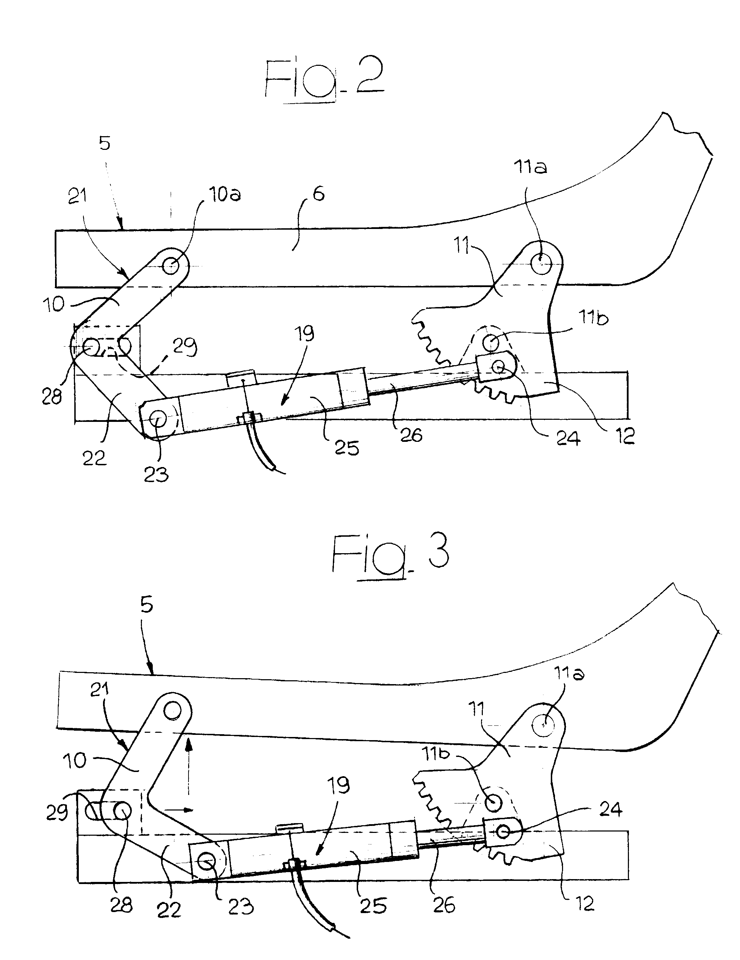

From looking at figures 2,3, it clearly appears that for a same position of the rear arm 11, i.e. without actuating the device 15 for controlling the height adjustment of the seat, a rotation of front arm 10 is obtained by shortening the cylinder 19 so as to cause a change in the attitute in the seat, i.e. in particular a lifting of the front part of the cushion with respect to the rear part. In a opposite way, by lengthening the cylinder 19, an opposite change in the attitute of the cushion is obtained, i.e. a lowering of the front part of the cushion with respect to the rear part. In order to allow for proper movement of the linkage, in the device according to the invention the front arm 10 is not articulated to the base frame 20 around a fixed axis, but rather it is connected to the base frame 20 by a pin-and-slot coupling. In particular, with reference to the example shown in the drawings, the two front arms 10 are connected to each other by a cross shaft 28 which engages at each end a slot 29 formed in a bracket secured to the respective profile 9.

The device according to the invention thus enables the independent adjustment of the height of the entire seat and the attitude of the cushion, i.e. the height of the front part of the cushion with respect to the rear part, by simple and inexpensive means.

Obviously, the basic principle of the invention lies in that at least one arm forming part of the parallelogram linkage is provided which is adjustable in length. Therefore, the arrangement of this arm within the parallelogram linkage could be also different from that shown by way of example in the present description. Furthermore, as indicated already, the arm adjustable in length could be made also in a different way, i.e. not necessarily in form of a cylinder with a stem which can be locked by a helical spring, as disclosed herein.

Finally, naturally, while the principle of the invention remains the same, the details of construction and the embodiments may widely vary with respect to what has been described and illustrated purely by way of example, without departing from the scope of the present invention.

## Claims

1. Device for adjusting the height of a motor-vehicle seat, comprising a base frame (20) and a cushion frame (5) connected to the base frame (20) by a parallelogram linkage (8) and means (!5) for adjusting the parallelogram linkage (8), characterized in that said parallelogram linkage (8) comprises an arm (19) adjustable in length, so as to enable for an adjustment of the attitude of the cushion (2) of the seat independently from the adjustment of the height of the entire seat (1).

2. Device according to claim 1, wherein said parallelogram linkage (8) comprises at least one front articulated arm (10) and at least one rear articulated arm (11) which connect the cushion frame (5) and the base frame (20) to each other, characterized in that said front and rear arm (10, 11) have extensions (22, 12) projecting beyond the articulations to the base frame (20), which are connected to each other by means of said arm (19) which is adjustable in length.

3. Device according to claim 2, characterized in that said arm adjustable in length (19) is a cylinder comprising a cylindrical body (25) and a stem (26) slidably mounted within the cylindric body (25) and adapted to be locked in position by means of a helical spring carried inside of the cylindrical body (25) which in its rest condition is tightened around the stem (26), means (27) being provided for expanding the turns of said helical spring so as to enable said stem (26) to slide freely with respect to the cylindrical body (25).

4. Device according to claim 1, characterized in that said parallelogram linkage (8) is provided at each side of the seat and said arm adjustable in length (19) is provided at least on one of the sides of the seat.

5. Device according to claim 1, characterized in that the parallelogram linkage (8) is provided at the center of the seat.
